(19) **Europäisches Patentamt / European Patent Office / Office européen des brevets**

(11) **EP 4 047 167 A1**

(12) **EUROPEAN PATENT APPLICATION**

(43) Date of publication:
**24.08.2022 Bulletin 2022/34**

(21) Application number: **22155603.8**

(22) Date of filing: **08.02.2022**

(51) International Patent Classification (IPC):
**E05F 15/73** $^{(2015.01)}$   **H02J 9/06** $^{(2006.01)}$
**H02J 7/00** $^{(2006.01)}$

(52) Cooperative Patent Classification (CPC):
**H02J 9/061; E05F 15/73;** E05Y 2400/40;
E05Y 2400/512; E05Y 2400/612; E05Y 2800/21;
E05Y 2800/25; E05Y 2900/132; H02J 7/0014;
H02J 2207/50

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2021  IT 202100003908**

(71) Applicant: **Face S.r.l.**
**31030 Casier (Treviso) (IT)**

(72) Inventor: **MENUZZO, Ferdinando**
**31030 Casier (Treviso) (IT)**

(74) Representative: **Feltrinelli, Secondo Andrea**
**APTA S.r.l.**
**Patent Department**
**Via Ca' di Cozzi, 41**
**37124 Verona (IT)**

(54) **ELECTRONIC SYSTEM TO ACTIVATE THE EMERGENCY OPENING AND/OR CLOSING OF AUTOMATIC DOORS**

(57)   The present invention relates to an electronic system to activate the emergency opening and/or closing of automatic doors, and in particular to activate the emergency opening and/or closing of automatic pedestrian doors.

Object of the invention is also a method of activating the aforementioned electronic system as well as an automatic door equipped with such a system.

Fig. 2

**Description**

TECHNICAL FIELD OF THE INVENTION

The present invention relates to an electronic system to activate the emergency opening and/or closing of automatic doors, and in particular to activate the emergency opening and/or closing of automatic pedestrian doors.

Object of the invention is also a method of activating the aforementioned electronic system as well as an automatic door equipped with such a system.

STATE OF THE PRIOR ART

As is known, any automatic door that reflects the technical and functional requirements to manage emergency situations requires a system that allows, for example in a fault situation or in the event of a power failure, to activate the emergency opening and/or closing of the same. Currently, the state of the prior art concerning the systems for the emergency opening and/or closing of automatic doors based on the storage of electrical energy, and in particular in the pedestrian ones, provides for the use of electronic systems based on special kits batteries. This technology, although well established, nevertheless has several disadvantages:

- batteries require high maintenance, many times in the face of a relatively low lifespan when compared with other technologies that are becoming increasingly popular in recent years and which will be described in more detail during the description of the present invention;
- the performance and life span of the batteries are significantly affected by the temperature; for this, over time, the changes in temperature to which the battery is subjected during its normal use, can reduce its efficiency and duration;
- batteries that have reached the end of their life or are "exhausted" are classified as hazardous waste and, as such, are subject to particularly stringent management obligations and duties: this also entails high costs for their disposal;
- the batteries have a non-negligible weight which during transport and/or delivery involves a general increase in costs as well as greater management difficulty.

It is therefore necessary to design and implement an electronic system to activate the emergency opening and/or closing of automatic doors that is able to mitigate and/or overcome the disadvantages listed above.

OBJECTS OF THE INVENTION

The main object of the present invention is to provide an electronic system to activate the emergency opening and/or closing of automatic doors capable of improving the state of the prior art previously described.

A further object of the present invention is to provide an electronic system to activate the emergency opening and/or closing of automatic doors using a technology capable of offering high performance.

Yet another object of the present invention is to provide an electronic system to activate the emergency opening and/or closing of automatic doors using a technology having a long-life span and very low maintenance requirements.

A further object of the present invention is to provide an electronic system to activate the emergency opening and/or closing of automatic doors using a technology that can be easily disposed of with a reduction in polluting materials compared to the state of the prior art.

Finally, another object of the present invention is to provide an electronic system to activate the emergency opening and/or closing of automatic doors using a technology with reduced transport and/or management costs compared to the state of the prior art.

This and other objects are achieved by an electronic system to activate the emergency opening and/or closing of at least one automatic door according to the attached claim 1.

Object of the present invention is also an automatic door according to the attached claim 14.

Another object of the present invention is also a method of activating an electronic system for the emergency opening and/or closing of automatic doors according to the attached claim 15.

The dependent claims refer to preferred and advantageous forms of the invention.

BRIEF DESCRIPTION OF THE DRAWINGS

Further characteristics and advantages of the present invention will become more evident from the detailed description of some preferred embodiments of an electronic system for activating the emergency opening and/or closing of automatic doors, given by way of non-limiting example in the accompanying drawings, in which:

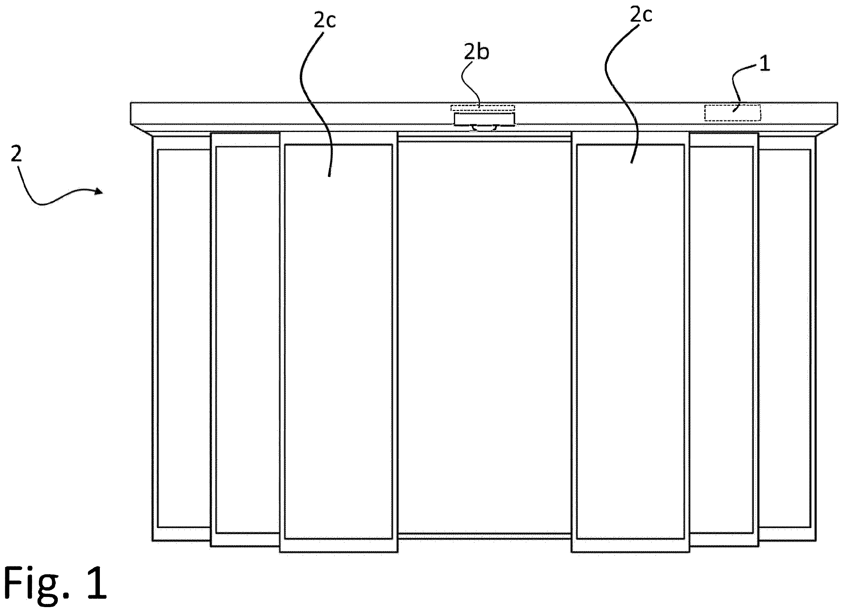

- Figure 1 shows an automatic door equipped with an electronic system to activate the emergency opening and/or closing of one or more doors thereof according to a preferred embodiment of the present invention;

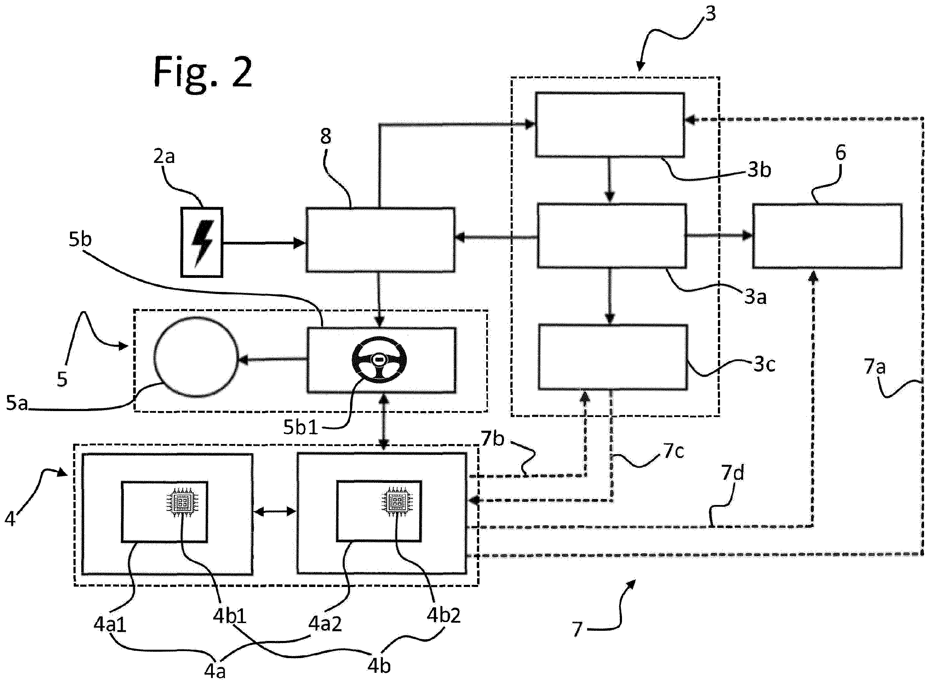

- Figure 2 shows a block diagram relating to an electronic system to activate the emergency opening and/or closing of an automatic door according to a preferred embodiment of the present invention;

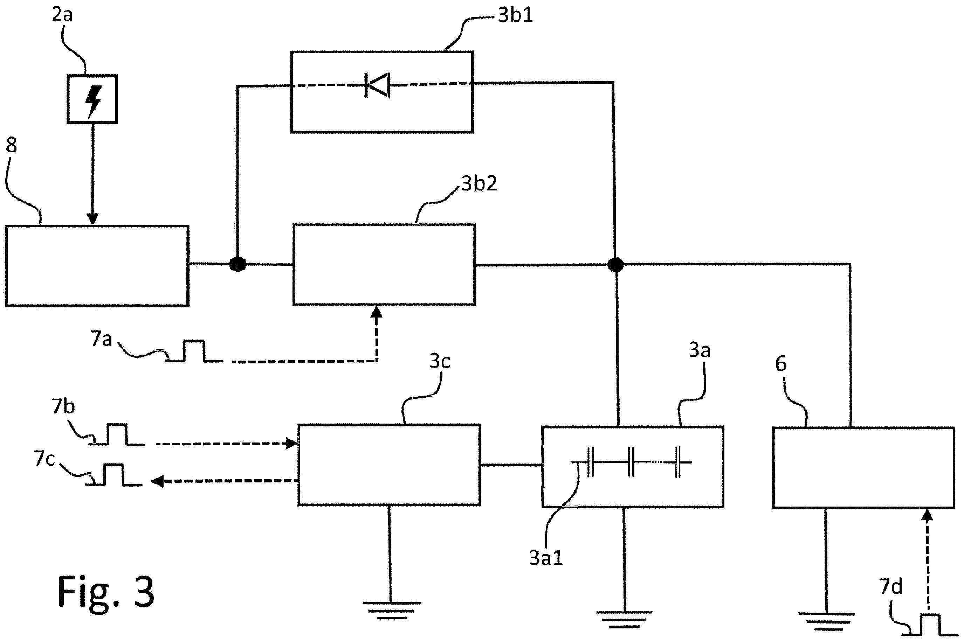

- Figure 3 shows a detailed block diagram of the auxiliary power supply means of the electronic system to activate the emergency opening and/or closing of an automatic door according to a preferred embodiment of the present invention;

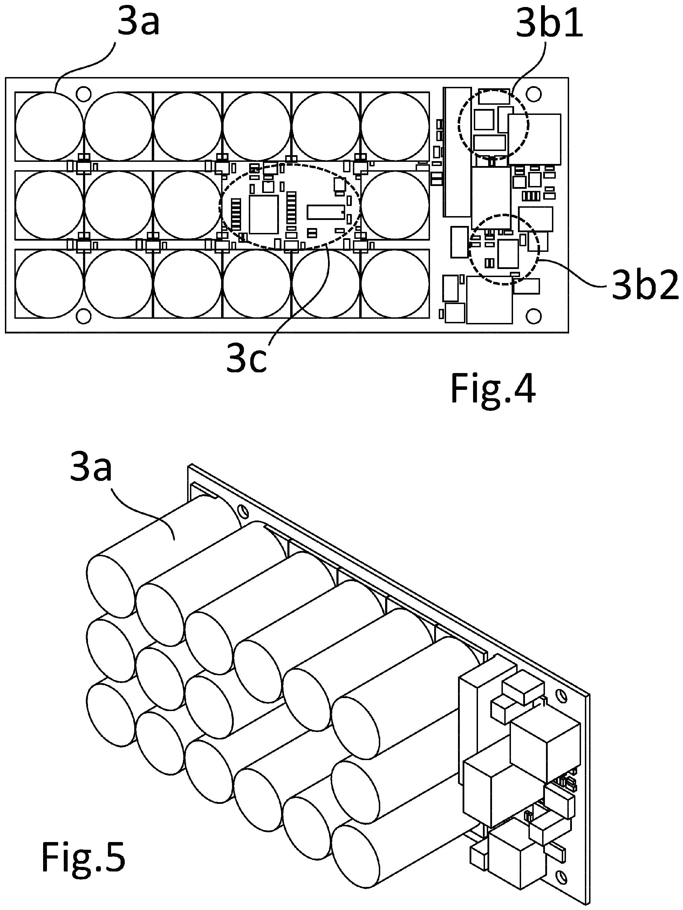

- Figure 4 shows a top view of an electronic system to activate the emergency opening and/or closing of an automatic door according to a preferred embodiment of the present invention;
- Figure 5 shows a perspective view of the electronic system to activate the emergency opening and/or closing of an automatic door according to the preferred embodiment example of the present invention shown in Figure 4.

In the accompanying drawings, identical parts or components are indicated by the same reference numbers.

EMBODIMENTS OF THE INVENTION

With reference to the attached figures, the reference number 1 shows as a whole an electronic system to activate the emergency opening and/or closing of at least one automatic door 2 according to the present invention.

This electronic system 1 comprises main power supply means 2a, auxiliary power supply means 3 for the at least one automatic door 2, processing and control means 4 of the electronic system 1 which are in electrical communication with the auxiliary power supply means 3 and activation means 5 of the at least one automatic door 5.

As shown in the embodiment of the invention of the attached figures, the automatic door 2 can be an automatic pedestrian door, for example with one or more leaves 2c, if desired, leaves sliding with respect to a fixed part of the door, so as to open or close a passage opening for the door 2.

By "automatic pedestrian door" is meant an automatic door located, for example, near or in a construction or building, i.e., for entry/exit into/from an area or zone of a construction or building, parking or park and therefore it is suitable to be crossed or traveled on foot by a person or an animal.

The main power supply means 2a, which can be, for example, the electricity grid, supply the electronic system 1 with the power supply or energy necessary for its normal operation, i.e., the power supply or energy necessary for normal opening and/or closing operations.

The terms "normal functioning", "normal operations" refer to an operational mode of the electronic system 1 in which the main power supply means 2a do not have faults or malfunctions and are therefore capable of supplying the electronic system 1 with power or energy required to open and/or close the automatic door 2 for a large number of times in accordance with the performance required in the reference sector.

As regards the auxiliary power supply means 3, they comprise energy storage means 3a, charging and/or discharging means 3b of the energy storage means 3a and monitoring and/or balancing means 3c of the energy storage means 3a.

In particular, the energy storage means 3a comprise a plurality of supercapacitors 3a1, preferably electric double-layer or EDLC capacitors, designed to supply the energy necessary for the electronic system 1 and preferably for the activation means 5, to activate at least one emergency opening and/or closing of the at least one automatic door 2 in case of failure or malfunction of the main power supply means 2a.

Supercapacitors generally use electrodes immersed in an electrolytic solution which in turn contains a cellulose or ceramic separator, depending on the type of electrolyte used. In particular, in EDLC capacitors the electrodes have a double-layer electrostatic capacity much higher than the electrochemical pseudocapacity of normal batteries, obtaining the separation of the charge in a double Helmholtz electric layer at the interface between the surface of the conductive electrode and the electrolyte. The charge separation is on the order of a few ångströms (typically between about 0.3 and about 0.8 nm), much smaller than in a conventional capacitor. Being able to associate the double Helmholtz electric layer that the electrolyte forms with the two electrodes to a pair of armatures of a capacitor, and, recalling that the equation (1) for calculating the capacity of a flat capacitor with parallel faces is:

$$C = S\frac{\varepsilon}{d}; \qquad (1)$$

where "C" is the capacitance, "S" is the surface of the two plates, "$\varepsilon$" is the absolute electrical permittivity of the insulator and "d" the distance between the plates, it is possible to deduce that the smaller the distance between the plates, the higher the capacitance of the capacitor. In the case of supercapacitors, and specifically EDLC capacitors, this distance is very small and consequently the capacitance will be very high compared to traditional capacitors.

The voltage across the electrodes of the supercapacitors, i.e., the voltage range where the supercapacitor can operate without danger of breaking, depends on the type of electrolyte used and typically ranges between about 1 V and about 3.5 V.

The main types of electrolyte that can be used are electrolytes in aqueous solution, which allow high conductivity but low voltage ranges, typically of the order of about 1 V, or organic electrolytes, which allow high voltage ranges, even up to about 3.5 V, but low conductivity.

Recalling that equation (2) for calculating the maximum energy stored in a capacitor with flat parallel faces, which is equal to the work performed to charge it, results:

$$W_{max} = \frac{1}{2} C V_{max}^2; \qquad\qquad (2)$$

where "$V_{max}$" is the maximum voltage applicable to the supercapacitor, it can be deduced that, due to the quadratic proportionality between stored energy and voltage, low values of the latter translate into insufficient stored energy values to activate the emergency opening and/or closing of the automatic door.

In order to solve or reduce the problem associated with this aspect, it is necessary to place several supercapacitors in series with the aim of increasing the maximum voltage with which to activate the emergency opening and/or closing of the automatic door.

In particular, in the non-limiting embodiment of the present invention shown in the figures, the plurality of supercapacitors 3a1 is composed of sixteen supercapacitors placed in series.

In other embodiments of the present invention, the plurality of supercapacitors 3a1 could be composed only of two, four, eight or more supercapacitors 3a1 placed in series, according to the application requirements, or even of several series of supercapacitors placed in parallel with each other.

Assuming, by way of example, that at least an energy equal to 1200 J is required to activate the emergency opening and/or closing of the automatic door and considering an aging factor of the supercapacitors in ten years of life which is typically equal at about 0.63, the energy that can be stored by the supercapacitor series must be at least about 1900 J while the equivalent capacity at least about 2.5 F. In this example, this requirement would be largely met using a series of sixteen supercapacitors each having a capacity equal to about 50 F and a maximum working voltage of about 2.6 V. There will therefore be an equivalent capacity of the series of supercapacitors equal to about 3.1 F, a maximum working voltage of about 42 V and therefore a storable energy of about 2700 J.

Between each supercapacitor that makes up the plurality of supercapacitors 3a1 there are small differences in capacitance, due for example to small imperfections in the materials with which they are made, which can affect the division of the voltage between each of them, up to the worst case where an overvoltage can lead to the breakage of one or more supercapacitors and therefore to the malfunction or breakage of the entire plurality of supercapacitors 3a1. Such imperfections of the materials, for example an imperfect insulation, lead to also having different dispersion or leakage currents between each supercapacitor of the plurality of supercapacitors 3a1.

To reduce this problem, the electronic system 1 comprises, as mentioned above, at least monitoring and/or balancing means 3c of the energy storage means 3a or better of the plurality of supercapacitors 3a1.

Said monitoring and/or balancing means 3c can comprise at least one voltage splitter, for example for balancing the plurality of supercapacitors 3a1, and one or more voltage dividers, for example for monitoring the plurality of supercapacitors 3a1. In particular, such at least one voltage splitter can be a resistive voltage splitter suitable for compensating the differences between the leakage currents of each supercapacitor 3a1 while these one or more voltage splitter are, preferably, operationally associated with at least one differential multiplexer included in the monitoring and/or balancing means 3c, to allow the scanning of the channels corresponding to the pairs of supercapacitors 3a1 and the check of the congruity of the voltages at the ends of the pairs themselves.

In other embodiments of the present invention, the monitoring and/or balancing means 3c could comprise, in place of the voltage splitter, other types of components, such as for example a limiter with operational amplifier, or a limiter that uses suitable integrated circuits. These types of balancing reduce the dissipation of energy in the voltage partition phase compared to the use of a resistive voltage splitter as they use active electronic components, but with an increase in construction costs.

As regards the charging and/or discharging means 3b of the energy storage means 3a or better of the plurality of supercapacitors 3a1, they can comprise at least one current limiter 3b1 to charge or in any case supply the correct voltage to the plurality of supercapacitors 3al and/or at least one rectifier 3b2 for discharging or in any case selectively allowing the passage of the current discharged by the plurality of supercapacitors 3a1.

In particular, the current limiter 3b1 allows the plurality of supercapacitors 3a1 to be charged, providing them with the voltage value suitable for charging in the shortest possible time, while at the same time avoiding overcurrents that may not be sustainable by the power supply system.

By way of example, in the event that the main power supply voltage is an electricity grid at approximately 220 V and in the event that the maximum voltage applicable to the ends of the plurality of supercapacitors 3a1 is approximately 42 V, the current limiter 3b1 will limit the charging current, for example at about 3 A, and will supply the plurality of supercapacitors 3a1 with a charging voltage at most equal to about 42 V, for example in a time equal to about one minute.

The rectifier 3b2, on the other hand, allows the plurality of supercapacitors 3a1 to be discharged, when necessary, for example in the event of failure or malfunction of the main power supply means 2a of the automatic door 2.

In the embodiment of the invention shown in the figures, this rectifier 3b2 is a p-n junction diode, preferably of the Schottky type, i.e., a diode with low threshold voltage and high switching speed.

In particular, the p-n junction diode has a positive anode or pole facing the plurality of supercapacitors 3a1 while a cathode or negative pole facing at least one power supply bus or channel 8, which will be described later in more detail, actually functioning, such as a one-way current switch.

The p-n junction diode, in the charging phase and in the charge maintenance phase, i.e., when the plurality of supercapacitors 3a1 is charged but the electronic system 1 does not need to activate an emergency opening and/or closing, is reverse biased, thus presenting a higher voltage on the cathode or negative pole than the voltage on the anode or positive pole. In practice, during the aforementioned phases, the main power supply voltage will be the voltage present on the cathode or negative pole while the maximum charge voltage of the plurality of supercapacitors 3a1 will be the voltage present on the anode or positive pole.

Naturally, the main supply voltage or in any case the voltage present on the cathode or negative pole of the p-n junction diode, during normal operation of the electronic system 1, will always be greater than the maximum charge voltage of the plurality of supercapacitors 3a1. In these phases the p-n junction diode prevents the passage of current, since it acts as an open switch.

In the discharge phase, i.e., when the electronic system 1 must activate an emergency opening and/or closing of the automatic door 2, the p-n junction diode is directly polarized, thus presenting a lower voltage on the cathode or negative pole with respect to the voltage present on the anode or positive pole. In practice, during the aforementioned step, the main supply voltage or in any case the voltage present on the cathode or negative pole will be lower than the maximum charge voltage of the plurality of supercapacitors 3a1. During this phase, the p-n junction diode allows the passage of current, since it actually acts as a closed switch. The drop in the main power supply voltage with respect to the maximum charge voltage of the plurality of supercapacitors 3a1 can be caused, for example, by a failure or malfunction of the main power supply means 2a of the automatic door 2. In this case it is therefore necessary to operate the emergency opening and/or closing of the automatic door 2 through the energy discharged from the plurality of supercapacitors 3a1.

The electrical communication of the processing and control means 4 with the auxiliary power supply means 3 can take place by means of at least one power supply bus or channel 8 designed to supply the main power supply voltage, delivered by the main power supply means 2a, to the electronic system 1 and its components.

In particular, the main power supply voltage supplied by the main power supply means 2a of the automatic door 2 can be supplied, for example by means of an AC/DC converter, to the power supply bus or channel 8.

The processing and control means 4 are operatively connected with actuation means 5 of the automatic door 2 and can advantageously comprise at least one electronic board 4a including at least one microcontroller 4b.

In the exemplary and non-limiting embodiment of the present invention illustrated in the figures, the processing and control means 4 comprise a main electronic board 4a1 including a first microcontroller 4b1 adapted to manage the normal operation of the electronic system 1 and an auxiliary electronic board 4a2 including a second microcontroller 4b2 adapted to manage the functioning of the electronic system 1 in the event of failure or malfunction of the main power supply means 2a, i.e., in the event of an emergency, or even in the event of failure or malfunction of the main electronic board 4a1. In this case the first microcontroller 4b1 is in electronic communication with the second microcontroller 4b2 so as to be able to reciprocally inform, for example sending an emergency signal, of any failure or malfunction of the main power supply means 2a or of one of the two electronic boards 4a1, 4a2, and therefore about the need to activate the emergency opening and/or closing of the automatic door 2.

In other embodiments of the present invention, the processing and control means 4 could comprise only one electronic board 4a including a microcontroller 4b adapted to manage both the normal operation of the electronic system 1 and the operation of the electronic system 1 in case of emergency, if the emergency situation does not have to meet specific regulatory requirements that impose the management of a fault in the processing and control means 4.

In general, the at least one microcontroller 4b is designed to send and/or receive a plurality of control signals 7 suitable for managing and/or supervising the operation of the electronic system 1, effectively controlling all the logic of the electronic system 1.

In particular, the at least one microcontroller 4b is designed to send and/or receive at least one signal 7a to activate and/or deactivate the charging and/or discharging means 3b, at least one signal 7b to drive the monitoring and/or balancing means 3c and at least one signal 7c for measuring the voltage of said plurality of supercapacitors 3a1.

More in detail, the signal 7a is used to activate the charging means 3b or better the current limiter 3b1 to charge the plurality of supercapacitors 3a1 and, once the charging is completed, deactivate the charging means 3b or better the current limiter 3b1.

The signal 7b is used as a timing or clock signal to drive or control the monitoring and/or balancing means 3c or better the selection of each channel of the differential multiplexer, if provided, on the plurality of supercapacitors 3a1.

The electronic system 1 can further comprise at least one measuring means for measuring the voltage of the plurality of supercapacitors 3a1. In this case, the at least one microcontroller 4b is designed to send and/or receive at least a signal 7c for detecting the voltage measured by the measuring means.

In particular, the measuring means is able to measure the voltage, for example directly or indirectly, present at the ends of the plurality of supercapacitors 3a1 and send a voltage detection signal 7c to the microcontroller 4b which can then check whether the measured voltage is able to guarantee the correct operation and efficiency of the electronic system 1. Said measuring means can be for example an A/D converter, if desired included in the processing and control means 4 or better in the electronic board 4a, to measure the voltage across the plurality of supercapacitors 3a1 in a direct way.

The electronic system 1, as illustrated in the embodiment of the invention of the attached figures, can further comprise at least one trial or test circuit 6 which connects a resistive load to the energy storage means 3a for measuring the amount of energy present in the plurality of supercapacitors 3a1. In this case, the at least one microcontroller 4b is designed to send and/or receive at least one signal 7d to activate and/or deactivate the trial or test circuit 6 and therefore the connection of the resistive load to the energy storage means 3a.

The trial or test circuit 6 therefore allows to check whether the energy stored by the plurality of supercapacitors 3a1 is sufficient to activate the emergency opening and/or closing of the automatic door 2.

As regards the actuation means 5 of the automatic door 2, they can advantageously comprise at least one motor 5a and driving means 5b of the at least one motor 5a.

The motor 5a is preferably a direct current or BLDC brushless electric motor. This type of motor, since it does not need sliding electrical contacts on the rotor shaft to work, allows both an increase in its life and a decrease in maintenance activities as well as the elimination of the electromagnetic noise present in direct current electric motors. A further advantage is given to the fact that this motor has a limited size with respect to the torque it is capable of delivering, and thus it is able to work in optimal performance conditions.

In addition, the BLDC motor 5a can advantageously be made with two independent stator windings, so that, should a failure or malfunction of one winding occur, the other can still activate the opening and/or closing of the automatic door 2.

As regards the driving means 5b, they comprise at least a control unit 5b1 equipped with at least one power bridge, if desired an H-bridge or full-bridge, to control and/or drive, preferably with the aid of the processing and control means 4 or better with the aid of the at least one microcontroller 4b, the at least one motor 5a.

It should be noted that in the attached figures, the components of the electronic system 1 are shown in blocks separated from each other purely for a matter of illustrative and explanatory simplicity, however from the construction point of view, they can be, all or only some, integrated in the at least one electronic board 4a of the processing and control means 4, thereby effectively facilitating the processing and control functions performed by the at least one microcontroller 4b.

Subject-matter of the present invention is also an automatic door 2, preferably an automatic pedestrian door, comprising at least an electronic system 1 and one or more leaves 2c.

The automatic door 2 may comprise one or more internal or external sensors 2b, such as for example an external motion detection sensor to activate the opening of the door itself during normal operation, one or more safety sensors, etc.

The automatic door 2 can also comprise a screen or display, if desired a tactile screen or touch screen, operatively connected with the electronic system 1 for selecting one or more functions of the door itself, for example partial automatic operation, i.e., an operation with partial opening of one or more leaves 2c of automatic door 2, one-way or two-way automatic operation, etc.

In particular, following a failure or malfunction of the main power supply means 2a, the plurality of supercapacitors 3a1 supplies the energy necessary for the electronic system 1 to activate the emergency opening and/or closing of the one or more leaves 2c of the automatic door 2 itself.

A brief, non-limiting example of operation of the automatic door 2 and in particular of the electronic system 1 according to the embodiment of the present invention shown in the figures is described below.

The automatic door 2 can operate during normal use by opening and closing through the motor 5a which is powered by the main power supply means 2a of the electronic system 1, which by way of example is assumed to be the electricity grid.

When the automatic door 2 is first switched on, the electricity grid delivers, for example through an AC/DC converter, to the power supply bus or channel 8, the current necessary for the charging means 3b to charge the plurality of supercapacitors 3a1. The second microcontroller 4b2 sends a signal 7a to activate the charging means 3b or better the current limiter 3b1 which limits the current supplied by the power supply bus or channel 8 to the correct current for charging the plurality of supercapacitors 3a1. This voltage is distributed and balanced on the plurality of supercapacitors 3a1 by means of the monitoring and/or balancing means 3c so as to avoid overvoltages. Once charging is complete, the second microcontroller 4b2 sends a signal 7a to deactivate the current limiter 3b1. The voltage on the discharge means 3b or better on the rectifier 3b2 is such as not to allow the passage of current towards the power supply bus or channel 8. The electronic system 1 is therefore ready to supply, if necessary, the energy stored in the plurality of supercapacitors 3a1 to the actuation means 5.

During the charge maintenance phase, i.e., as long as the automatic door 2 is used in normal operating mode and therefore does not require an emergency opening and/or closing, the second microcontroller 4b2 can request voltage verification of the plurality of supercapacitors 3a1 by means of the measuring means which can send a signal 7c containing the measurement of the detected voltage, useful in general for checking the efficiency of the electronic system 1. In this charge maintenance phase, the second microcontroller 4b2 can also send a signal 7d to activate the trial or test circuit 6 in order to detect whether the quantity of energy stored in the plurality of supercapacitors 3a1 is sufficient to activate at least one emergency opening or closing of the automatic door 2.

The discharge of the plurality of supercapacitors 3a1 can take place for example in the event of failure or malfunction of the main power supply means 2a and, in this case, of the power supply network. This failure or malfunction can be reported from the first microcontroller 4b1 to the second microcontroller 4b2, for example, sending a special emergency signal. The failure or malfunction causes a voltage drop which is also reflected on the power supply bus or channel 8. The voltage drop activates the rectifier 3b2 which opens the current passage between the energy storage means 3a and the power supply bus or channel 8, which it can therefore supply the actuation means 5 with the energy necessary to actuate the emergency opening and/or closing of the automatic door 2. Naturally, the electronic system 1 does not wait for the main power supply voltage to reach zero before operating the emergency opening and/or closing, since also all the components that manage the logic of the electronic system 1 require power supply. For this reason, the activation of the emergency opening and/or closing takes place following the drop of the power supply voltage, for example already detected by the AC/DC converter, to a value such as to keep all the components that regulate the logic of the electronic system 1, for example the microcontrollers 4b1, 4b2 and/or any other components present on the electronic board 4a or on the electronic boards 4a1, 4a2, powered.

Subject-matter of the present invention is thus even a method for activating an electronic system 1 or for managing the operation of an automatic door 2.

This method comprises a first step of activating the normal operation of the at least one automatic door 2, for example feeding the at least one automatic door 2 and therefore also the electronic system 1 or the respective actuation means 5 by means of the main power supply means 2a.

Subsequently, the method comprises the step of charging the energy storage means 3a comprising a plurality of supercapacitors 3a1 by means of the main power supply means 2a.

The charging step may further comprise the sub-step of sending at least one signal 7a to activate the charging means 3b and/or also the sub-step of sending at least one signal 7b to drive the monitoring and/or balancing means 3c of the plurality of supercapacitors 3a1.

Thereafter, the step of discharging, following a failure or malfunction of the main power supply means 2a, is provided for the plurality of supercapacitors 3a1.

Subsequently, the step of supplying the energy discharged by the plurality of supercapacitors 3a1 to the actuation means 5 of the automatic door 2 is envisaged.

Finally, the step of activating the emergency opening and/or closing of the automatic door 2 by means of the actuation means 5 is provided.

The method according to the present invention can then include the step of verifying whether the energy stored by the plurality of supercapacitors 3a1 is enough to carry out the emergency opening and/or closing of the automatic door 2.

This step of verifying can comprise the sub-step of sending at least one signal 7d to activate at least one trial or test circuit 6 designed to measure the amount of energy stored in the plurality of supercapacitors 3a.

Finally, the method according to the present invention can also include the step of controlling the efficiency of the plurality of supercapacitors 3a1.

This controlling step may comprise the sub-step of receiving from a measuring means at least one signal 7c for detecting the voltage of the plurality of supercapacitors 3a1.

Naturally, when the main power supply means 2a were repaired, the processing and control means 4 would act on the system components so as to charge the supercapacitors 3a1 again, leaving instead to the main power supply means 2a the management of the actuation means 5 for closing and opening the automatic door 2.

The electronic system 1 is capable of providing high reliability and performance.

The use of a plurality of supercapacitors as energy storage means allows significant advantages compared to the use of similar systems using batteries.

Supercapacitors offer high power peaks in short periods and a longer lifespan as well as low maintenance costs.

Furthermore, supercapacitors have a lower temperature sensitivity than batteries, thus being able to be used in a versatile way both indoors and outdoors.

Moreover, due to the nature of the reactions that occur in supercapacitors during the energy storage process, they do not introduce harmful chemicals during their use, nor do they pose a risk to the environment during dismantling.

Finally, the weight of the same compared to the battery is much lower, thus allowing greater ease of handling and delivery.

It has thus been seen that the present invention fully achieves the proposed aims.

Although only examples of embodiment of the present invention have been described, a person skilled in the art will understand that various modifications can be conceived without departing from the scope of protection defined by the following claims.

**Claims**

1. Electronic system (1) for activating the emergency opening and/or closing of at least one automatic pedestrian door (2), said electronic system (1) comprising main power supply means (2a) and auxiliary power supply means (3) for said at least one automatic door (2), processing and control means (4) of said electronic system (1) and actuation means (5) of said at least one automatic door (2), said processing and control means (4) being in electrical communication with said auxiliary power supply means (3), said processing and control means (4) being operatively connected with said actuation means (5) of said at least one automatic door (2), said auxiliary power supply means (3) comprising energy storage means (3a), charging and/or discharging means (3b) of said energy storage means (3a) and monitoring and/or balancing means (3c) of said energy storage means (3a), said electronic system (1) being **characterized in that** said energy storage means (3a) comprise a plurality of supercapacitors (3a1) designed to supply the energy necessary for said electronic system (1) to activate at least one emergency opening and/or closing of said at least an automatic door (2) in case of failure or malfunction of said main power supply means (2a).

2. Electronic system (1) according to any one of the preceding claims, wherein said processing and control means (4) are in electrical communication with said auxiliary power supply means (3) through at least one power supply bus or channel (8) designed to provide the main power supply voltage delivered by said main power supply means (2a) to said electronic system (1).

3. Electronic system (1) according to any one of the preceding claims, wherein said processing and control means (4) comprise at least one electronic board (4a) including at least one microcontroller (4b).

4. Electronic system (1) according to claim 3, wherein said processing and control means (4) comprise a main electronic board (4a1) including a first microcontroller (4b1) adapted to manage the normal operation of the electronic system (1), and an auxiliary electronic board (4a2) including a second microcontroller (4b2) adapted to manage the operation of the electronic system (1) in case of failure or malfunction of the main power supply means (2a) and/or in case of failure or malfunction of said main electronic board (4a1), said first microcontroller (4b1) being in electronic communication with said second microcontroller (4b2).

5. Electronic system (1) according to claim 3 or 4, wherein said at least one microcontroller (4b) is designed to send and/or receive a plurality of control signals (7) suitable to manage and/or supervise the operation of said electronic system (1), said plurality of control signals (7) comprising at least one signal (7a) for activating and/or deactivating said charging and/or discharging means (3b), at least one signal (7b) for driving said monitoring and/or balancing means (3c) and at least one signal (7c) for measuring the voltage of said plurality of supercapacitors (3a1).

6. Electronic system (1) according to any one of the preceding claims, wherein said actuation means (5) comprise at least one motor (5a) and driving means (5b) of said at least one motor (5a).

7. Electronic system (1) according to claim 6, wherein said driving means (5b) comprise at least a control unit (5b1) equipped with at least one power bridge to control and/or drive said at least one motor (5a).

8. Electronic system (1) according to any one of the preceding claims, wherein said charging and/or discharging means (3b) comprise at least one current limiter (3b1) for charging said energy storage means (3a) and/or at least one rectifier (3b2) to discharge said energy storage means (3a).

9. Electronic system (1) according to any one of the preceding claims, comprising at least one trial or test circuit (6) including a resistive load and wherein said at least one trial or test circuit (6) connects said resistive load to said energy storage means (3a) to verify the quantity of energy present in said plurality of supercapacitors (3a1).

10. Electronic system (1) according to any one of the preceding claims, wherein said monitoring and/or balancing means (3c) of said at least energy storage means (3a) comprise at least one voltage splitter for balancing the plurality of supercapacitors (3a1) and/or one or more voltage dividers and at least one differential multiplexer, said one or more voltage dividers being operatively associated with said at least one differential multiplexer for monitoring the plurality of supercapacitors (3a1).

11. Electronic system (1) according to the previous claim, wherein said at least one voltage splitter is a resistive voltage splitter suitable for compensating the differences between the leakage currents of said plurality of supercapacitors (3a1).

12. Electronic system (1) according to claim 10 or 11, wherein said differential multiplexer is configured to allow the scanning of the channels corresponding to said plurality of supercapacitors (3a1) and the verification of the congruity of the voltages across them.

13. Electronic system (1) when dependent on claims 3 and 6, wherein said auxiliary power supply means (3) and/or at least said driving means (5b) of said actuation means (5) are integrated in said at least one electronic board (4a) of said processing and control means (4).

14. Automatic pedestrian door (2) comprising at least one electronic system (1) according to any one of the preceding claims and one or more leaves (2c), wherein, following a failure or malfunction of said main power supply means (2a), said plurality of supercapacitors (3a1) supplies the energy necessary for said electronic system (1) to operate the emergency opening and/or closing of said one or more leaves (2c) of said automatic door (2).

15. Method for operating an electronic system (1) according to any one of claims 1 to 13 or for managing the operation of an automatic pedestrian door according to claim 14, comprising the steps of:

   - activating normal operation of at least one automatic door (2);
   - charging the energy storage means (3a) comprising a plurality of supercapacitors (3a1) by means of the main power supply means (2a);
   - discharging, following a failure or malfunction of the main supply means (2a), said plurality of supercapacitors (3a1);
   - supplying the energy discharged by said plurality of supercapacitors (3a1) to the driving means (5) of said automatic door (2);
   - activating the emergency opening and/or closing of said automatic door (2) by means of said actuation means (5).

Fig. 1

**Fig. 2**

Fig. 3

3a

3b1

3b2

3c

Fig.4

3a

Fig.5

**EUROPEAN SEARCH REPORT**

Europäisches
Patentamt
European
Patent Office
Office européen
des brevets

Application Number

EP 22 15 5603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/153768 A1 (TERMINE FABIO [IT] ET AL) 23 May 2019 (2019-05-23) | 1-3,5-7, 13-15 | INV. E05F15/73 H02J9/06 |
| Y | * abstract * * paragraphs [0037], [0038], [0044] - [0046]; figures 1,4 * | 4,8-10 | ADD. H02J7/00 |
| Y | US 5 144 153 A (SCHEPPMANN II LEROY E [US]) 1 September 1992 (1992-09-01) * abstract * * column 4, line 56 - column 5, line 15; figure 1 * | 4 | |
| Y | US 2011/036513 A1 (BANTA KEVIN D [US] ET AL) 17 February 2011 (2011-02-17) | 8 | |
| A | * abstract * * paragraphs [0032] - [0043]; figures 1-4 * | 1,14,15 | |
| Y | DE 40 28 190 A1 (DORMA GMBH & CO KG [DE]) 12 March 1992 (1992-03-12) * abstract * * column 1, line 68 - column 2, line 30; figure 1 * | 9 | TECHNICAL FIELDS SEARCHED (IPC) E05G E05F |
| Y | US 2016/172903 A1 (PESEK THOMAS A [US] ET AL) 16 June 2016 (2016-06-16) * abstract * * paragraphs [0015], [0016] * | 10-12 | |
| Y | US 2010/109607 A1 (ZHENG QINGFEI [CN] ET AL) 6 May 2010 (2010-05-06) * abstract * * paragraph [0020]; figure 3 * | 10-12 | |

-/--

The present search report has been drawn up for all claims

| Place of search | Date of completion of the search | Examiner |
|---|---|---|
| Munich | 30 June 2022 | Jäschke, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 22 15 5603

## DOCUMENTS CONSIDERED TO BE RELEVANT

| Category | Citation of document with indication, where appropriate, of relevant passages | Relevant to claim | |
|---|---|---|---|
| X | WO 2020/222024 A1 (MARQUARDT GMBH [DE]; INTEVAPRODUCTS FRANCE SAS [FR]) 5 November 2020 (2020-11-05) * abstract * * paragraph [0020]; figure 3 * * page 1, paragraph 3 – page 3, paragraph 1; figure 1 * | 1,14,15 | |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| Munich | 30 June 2022 | Jäschke, Holger |

EPO FORM 1503 03.82 (P04C01)

## ANNEX TO THE EUROPEAN SEARCH REPORT
## ON EUROPEAN PATENT APPLICATION NO.

EP 22 15 5603

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| US 2019153768 | A1 | 23-05-2019 | CN | 110029905 A | 19-07-2019 |
| | | | DE 102018129403 | A1 | 23-05-2019 |
| | | | US | 2019153768 A1 | 23-05-2019 |
| | | | US | 2021254389 A1 | 19-08-2021 |
| US 5144153 | A | 01-09-1992 | NONE | | |
| US 2011036513 | A1 | 17-02-2011 | NONE | | |
| DE 4028190 | A1 | 12-03-1992 | NONE | | |
| US 2016172903 | A1 | 16-06-2016 | CA | 2968121 A1 | 16-06-2016 |
| | | | CN | 105703474 A | 22-06-2016 |
| | | | CN | 205882832 U | 11-01-2017 |
| | | | EP | 3231058 A1 | 18-10-2017 |
| | | | RU | 2017122227 A | 11-01-2019 |
| | | | US | 2016172903 A1 | 16-06-2016 |
| | | | WO | 2016094760 A1 | 16-06-2016 |
| US 2010109607 | A1 | 06-05-2010 | CN | 201298739 Y | 26-08-2009 |
| | | | EP | 2342795 A1 | 13-07-2011 |
| | | | US | 2010109607 A1 | 06-05-2010 |
| | | | WO | 2010048849 A1 | 06-05-2010 |
| WO 2020222024 | A1 | 05-11-2020 | CN | 114585791 A | 03-06-2022 |
| | | | EP | 3963155 A1 | 09-03-2022 |
| | | | US | 2022120119 A1 | 21-04-2022 |
| | | | WO | 2020222024 A1 | 05-11-2020 |

EPO FORM P0459

For more details about this annex : see Official Journal of the European Patent Office, No. 12/82